# EUROPÄISCHE PATENTSCHRIFT

(11) **EP 0 816 159 B1**
(45) Veröffentlichungstag und Bekanntmachung des Hinweises auf die Patenterteilung: **09.10.2002**
(21) Anmeldenummer: 97110691.9
(22) Anmeldetag: 01.07.1997
(51) Int. Cl.: B60N 2/28

(54) **Kindersitz**
Infant seat
Siège d'enfants

(30) Priorität: 02.07.1996 DE 19626641
(43) Veröffentlichungstag der Anmeldung: 07.01.1998
(73) Patentinhaber: Bayerische Motoren Werke Aktiengesellschaft, 80788 München (DE)
(72) Erfinder: Strojny, Pawel, 80809 München (DE)

(56) Entgegenhaltungen:
- EP-A- 0 447 097
- DE-A- 3 634 501
- DE-A- 4 006 030
- DE-U- 9 203 620

## Beschreibung

Die Erfindung bezieht sich auf einen Kindersitz nach dem Oberbegriff des Anspruchs 1. Ein derartiger Kindersitz ist zum Beispiel aus der EP-A-0 447 097 bekannt.

Aus der DE 40 06 030 A1 der Firma Spalding & Evenflo Co. ist ein Reboard-Kindersitz bekannt, der sich aus einem Schalenteil und einem Untersatz zusammensetzt. Das Schalenteil nimmt über ein eigenes Gurtsystem das Kind auf. Der Untersatz ist seinerseits über den fahrzeugseitigen Sicherheitsgurt an einem Fahrzeugsitz zu befestigen. Eine Koppeleinrichtung stellt eine sichere Verbindung zwischen dem Schalenteil und dem Untersatz her. Zur Verwendung außerhalb des Fahrzeuges kann das Schalenteil über die Koppeleinrichtung vom Untersatz getrennt werden.

Von Nachteil ist, daß während des Verstellvorgangs die formschlüssige Verbindung zwischen Schalenteil und Untersatz aufgehoben wird. Soll die Neigung des Schalenteils auch während der Fahrt verändert werden, beispielsweise wenn das Kind während der Fahrt in der Sitzposition des Schalenteils einschläft, so kann die gewünschte Verstellung nur mit einem entsprechend hohen Sicherheitsrisiko erfolgen, da während der Verstellungsbewegung keine Verbindung zwischen Schalenteil und Untersatz mehr besteht. Aus Sicherheitsgründen hat daher eine Fahrtunterbrechung zu erfolgen.

Aufgabe der Erfindung ist es, den bekannten Kindersitz derart weiterzubilden, daß auch während der Neigungsverstellung des Schalenteils eine sichere Verbindung zwischen Schalenteil und Untersatz gewährleistet ist.

Diese Aufgabe wird durch die Merkmale des Anspruchs 1 gelöst. Das Verbindungselement, das erfindungsgemäß eine Zwischenposition (Sicherungsposition) einnehmen kann, in der zwar eine Neigungsverstellung möglich ist, gleichzeitig jedoch eine Bewegung in Löserichtung des Schalenteils verhindert wird, kann sowohl am Schalenteil als auch am Untersatz angeordnet sein und wirkt demnach formschlüssig entweder auf den Untersatz oder das Schalenteil. Durch die Erfindung wird eine sichere Neigungsverstellung auch während der Fahrt ermöglicht, so daß zur Veränderung der Neigung des Schalenteils keine Fahrtunterbrechunge mehr notwendig ist.

Die Erfindung kann durch ein einzelnes Verbindungselement oder durch mehrere Verbindungselemente bzw. Gruppen von Verbindungselementen realisiert werden. Die Rast-, Sicherungs- bzw. Entnahmeposition kann hierbei auch von jeweils verschiedenen Verbindungselementen eingenommen werden. Der Formschluß kann durch punktförmige oder flächige Anlage zwischen dem Verbindungselement (bzw. den Verbindungselementen) und entsprechend ausgestalteten Bereichen des Untersatzes bzw. des Schalenteils erfolgen.

Gemäß der Ausgestaltung der Erfindung nach Anspruch 2 wird eine stufenweise Neigungsverstellung des Schalenteils dadurch erreicht, daß ein stiftähnliches Verbindungselement in unterschiedliche Öffnungen einer Rastleiste eingreift. In der Sicherungsposition des Verbindungselementes ist das Verbindungselement außerhalb der Rastleiste, hintergreift jedoch nach wie vor einen Anschlag, so daß ein unbeabsichtigtes Lösen des Schalenteils vom Untersatz (beispielsweise bei einem Fahrzeugcrash) ausgeschlossen ist.

Die Weiterbildung der Erfindung nach Anspruch 3 sieht eine Verschiebung des Verbindungselementes in Querrichtung des Kindersitzes durch eine schräge Anlauffläche vor. Die Querverschiebung des Verbindungselementes kann direkt erfolgen, beispielsweise gemäß Anspruch 4 durch einen am Verbindungselement angeordneten Abschnitt, der an der Schrägfläche aufläuft. Anspruch 5 schlägt die mittelbare Verschiebung des Verbindungselementes über einen Hebel vor, der seinerseits mit der Schrägfläche zusammenwirkt.

Durch die Weiterbildung der Erfindung nach Anspruch 6 wird nach der Beendigung der Neigungsverstellung ein selbsttätiges Einrasten des Verbindungselementes in die jeweils nächstliegende Öffnung der Rastleiste erreicht.

Gemäß der Ausführungsform der Erfindung nach Anspruch 7 ist das Verbindungselement schalenteilseitig angeordnet und wird zusammen mit einem Hebel, der entsprechend der jeweiligen Benutzungssituation des Kindersitzes verschiedene Positionen einnehmen kann, bewegt. Rastleiste und Anschlag sind am Untersatz angeordnet, der in der Regel als von Stahlrohren gebildetes Gestell ausgeführt ist. In besonders vorteilhafter Weise kann der Hebel als Bestandteil eines Tragebügels für das Schalenteil ausgebildet sein (Anspruch 8).

Mögliche Ausführungsbeispiele der Erfindung sind nachfolgend in der Zeichnung dargestellt und näher erläutert. Es zeigt:
- Figur 1a, b: schematische Seitenansichten eines erfindungsgemäßen Kindersitzes mit unterschiedlich stark geneigten Schalenteilen,
- Figur 2: eine Seitenansicht auf den Bereich der Koppeleinrichtung eines ersten Ausführungsbeispiels der Erfindung,
- Figur 3: einen Schnitt entlang der Schnittverlaufslinie A-A in Figur 2,
- Figur 4: eine Seitenansicht auf den Bereich der Koppeleinrichtung eines zweites Ausführungsbeispiels der Erfindung,
- Figur 5: einen Schnitt entlang der Schnittverlaufslinie V-V in Figur 4 und
- Figur 6: einen Schnitt entlang der Schnittverlaufslinie VI-VI in Figur 5.

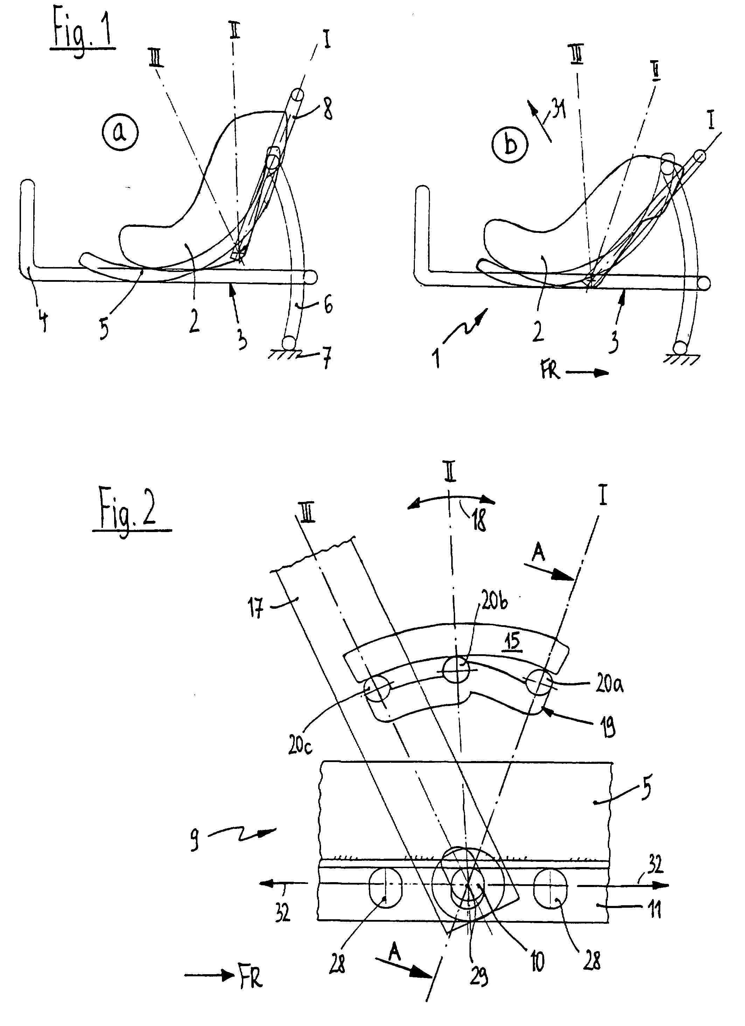

Die Figuren 1a, b zeigen einen Kindersitz 1 in vereinfachter Prinzipdarstellung. Der Kindersitz 1 setzt sich aus einem Schalenteil 2 und einem Untersatz 3 zusammen.

Der Untersatz 3 besteht im wesentlichen aus einem L-förmigen Gestell 4, an das ein gebogenes Rohr 5 zur Neigungsverstellung des Schalenteils 2 angebunden ist. Eine Stütze 6 stützt den Untersatz 3, der über den fahrzeugseitigen Sicherheitsgurt an einem Fahrzeugsitz befestigt wird, gegenüber dem Fahrzeugboden 7 ab. Wie bereits erwähnt, kann das Schalenteil 2 gegenüber dem Untersatz 3 in seiner Neigung verstellt werden. Die beiden Darstellungen der Figur 1 zeigen das Schalenteil 2 in der Sitz- bzw. Liegeposition für ein Kind. Das Schalenteil 2 kann zur Verwendung außerhalb des Fahrzeugs vom Untersatz 3 abgenommen werden (Löserichtung 31). Hierzu ist ein Tragebügel 8 vorgesehen. Über den Tragebügel 8 wird sowohl die Trennung von Schalenteil 2 und Untersatz 3 als auch die Neigungsverstellung des Schalenteils 2 vorgenommen. Hierzu kann der Tragebügel 8 die Positionen I bis III einnehmen.

Die Verbindung zwischen dem Schalenteil 2 und dem Untersatz 3 erfolgt über eine Koppeleinrichtung, die in ihrer Gesamtheit mit 9 bezeichnet ist. Die Koppeleinrichtung 9 verläuft in Längsrichtung des Kindersitzes 1 und ist symmetrisch an den beiden Seitenbereichen des Kindersitzes 1 angeordnet. In den Figuren 2 und 3 ist jeweils die rechte Koppeleinrichtung 9 eines entgegen der Fahrtrichtung FR (siehe Figur 1) ins Fahrzeug eingesetzten Kindersitzes 1 näher dargestellt.

Die Koppeleinrichtung 9 setzt sich im wesentlichen aus einem Bolzen 10, einer Rastleiste 11, einem Anschlag 12, einer Druckfeder 13 und einem Arm 17 des Tragebügels 8 zusammen. Der Arm 17 liegt in seinem Bereich 16 an einer Schrägfläche 15 des Untersatzes 3 an. Die Schrägfläche 15 schließt mit einer vertikal in Längsrichtung des Kindersitzes 1 verlaufenden Ebene einen spitzen Winkel ein und bildet einem Kreisbogen um die Drehachse 29 des Armes 17, wie insbesondere aus Figur 2 hervorgeht. Beim Verschwenken des Arms 17 in Richtung des Pfeils 18 wird der Arm 17, der an der Schrägfläche 15 des Schalenteils 2 anliegt, in Querrichtung 30 des Kindersitzes 1 bewegt. Unterhalb der Schrägfläche 15 ist eine Kulisse 19 für einem am Arm 17 angeordneten Stift 14 vorgesehen, die drei Rastöffnungen 20a, b, c aufweist. Zum Überführen des Stiftes 14 zwischen den einzelnen Rastöffnungen 20a bis c muß der Arm 17 gegen die Kraft einer im Inneren des Arms 17 angeordneten Druckfeder 21 in Richtung des Pfeils 22 bewegt werden. Hierzu ist der Arm 17 über ein Langloch 23 am Bolzen 10 gelagert.

Der Bolzen 10 durchsetzt den Arm 17 und eine schalenteilseitige Lagerung aus einem Tragteil 25 und einem Verstärkungsteil 26, um anschließend unterhalb des Rohres 5 des Untersatzes 3 weiter zu verlaufen. Anschlag 12 und Rastleiste 11 sind am Rohr 5 angeordnet. Zwischen das U-förmig gebogene Verstärkungsteil 26 ist die Druckfeder 13 eingesetzt, die über einen formschlüssig mit dem Bolzen 10 verbundenen Ring 27 eine Vorspannung auf den Bolzen 10 in Richtung der Mitte des Kindersitzes 1 ausübt. Die Rastleiste 11 ist mit mehreren Rastöffnungen 28 versehen, die als Langlöcher ausgebildet sind. Die Drehachse 29 des Tragebügels 8 ist gleich der Mittelachse des Bolzens 10.

Die Funktion der Koppeleinrichtung 9 wird nachfolgend näher erläutert:
In Abhängigkeit von der Stellung des Tragebügels 8 (I, II, III) nimmt der Bolzen 10 die Positionen a, b bzw. c ein. Die einzelnen Positionen sind mit durchgezogenen (Rastposition a) und strichlierten (Sicherungsposition b und Entnahmeposition c) Linien dargestellt. In der Position I des Arms 17 des Tragebügels 8 befindet sich der Bolzen 10 in der Rastposition a, d. h. er ist aufgrund der Kraft der Druckfeder 13 maximal in Richtung der Mitte des Kindersitzes 1 eingerückt. In dieser Stellung durchsetzt er eine der Rastöffnungen 28 der Rastleiste 11. Hierdurch ist die Neigung des Schalenteils 2 gegenüber dem Untersatz 3 festgelegt. Zudem kann das Schalenteil 2 nicht vom Untersatz 3 abgenommen werden.
Bei Überführung des Arms 17 in die Position II wird der Arm 17 in Richtung des Pfeils 30 nach außen gedrückt. Über den Kopfabschnitt 24 des Bolzens 10 wird auch der Bolzen 10 entsprechend in Richtung des Pfeils 30 verschoben und nimmt seine mit b bezeichnete Sicherungsposition ein. In der Stellung II des Arms 17 kann die Neigung des Schalenteils 2 gegenüber dem Untersatz 3 in Richtung der Pfeile 32 verändert werden, da der Bolzen 10 nicht mehr in Eingriff mit der Rastleiste 11 steht. Der Bolzen 10 hintergreift jedoch nach wie vor den Anschlag 12, so daß das Schalenteil 2 nicht vom Untersatz 3 abgenommen werden kann. Auch bei starker Abbremsung des Fahrzeugs oder bei crashbedingten hohen Verzögerungswerten bleibt die Verbindung zwischen Schalenteil 2 und Untersatz 3 und damit zwischen Schalenteil 2 und Fahrzeug erhalten.
Erst in der Position III des Arms 17 ist der Bolzen 10 maximal nach außen verschoben (Entnahmeposition c) und gibt nunmehr das Schalenteil 2 frei.

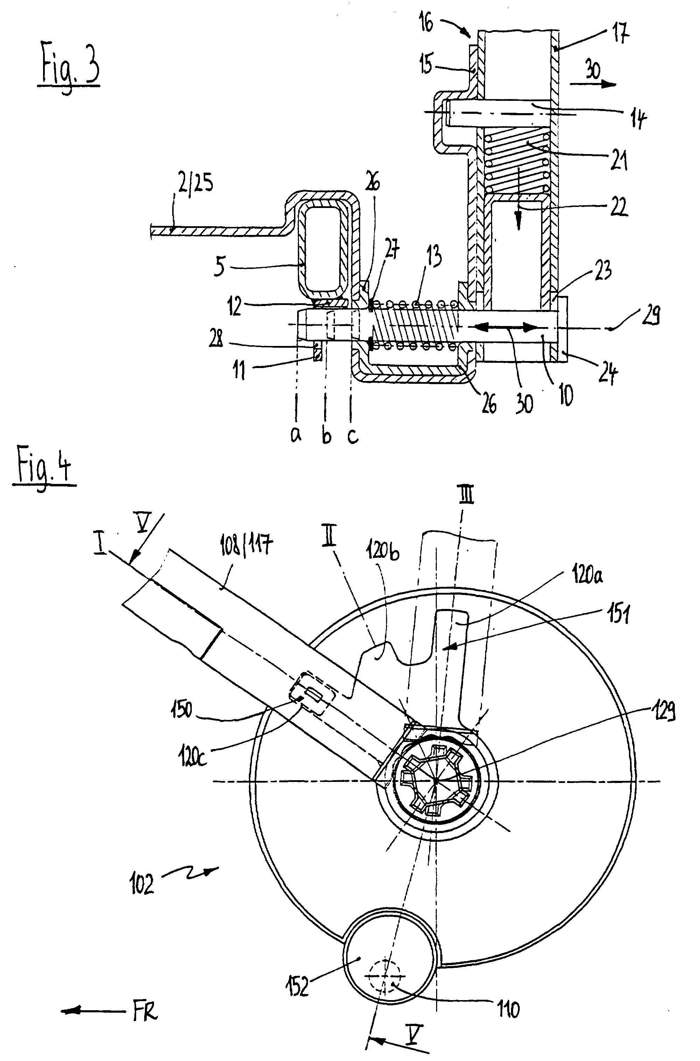

Die Figuren 4 bis 6 zeigen ein zweites Ausführungsbeispiel der Erfindung. Dargestellt ist hierbei die linke Seite des entgegen der Fahrtrichtung FR in ein Fahrzeug eingesetzten Kindersitzes 101. Während gemäß der Figuren 2 und 3 die Drehachse 29 unterhalb der Schrägfläche 15 liegt, besitzt der Kindersitz 101 des zweiten Ausführungsbeispiels eine oberhalb einer Schrägfläche 115 angeordnete Drehachse 129.

An einem Schalenteil 102 des Kindersitzes 101 ist ein Arm 117 eines Tragebügels 108 drehbar gelagert (Drehachse 129). Der Arm 117 ist innenseitig mit einer Druckfeder 121 versehen. Am Arm 117 ist ein Kulissenstein 150 angeordnet, dem eine Kulisse 151 am Schalenteil 102 zugeordnet ist. Entsprechend der drei Aussparungen 120a, b und c der Kulisse 151 kann der Arm 117 die Positionen I bis III einnehmen. Unterhalb der Drehachse 129 befindet sich hinter einer Abdeckung 152 des Schalenteils 102 ein Bolzen 110.

Der Bolzen 110 ist in Querrichtung 130 des Kindersitzes 101 verschieblich gelagert und durchsetzt einerseits den Aufbau 125 des Schalenteils 102 sowie ein Verstärkungsblech 126 und andererseits in seiner innersten Position a eine von mehreren Rastöffnungen 128 einer Rastleiste 111. Die Rastleiste 111 ist ebenso wie ein Anschlag 112 an einem Rohr 105 des Untersatzes 103 angeschweißt. Zur Querverschiebung des Bolzens 110 trägt dieser ein aufgestecktes Element 154, das in eine Nut 155 des Bolzens 110 eingesetzt ist.

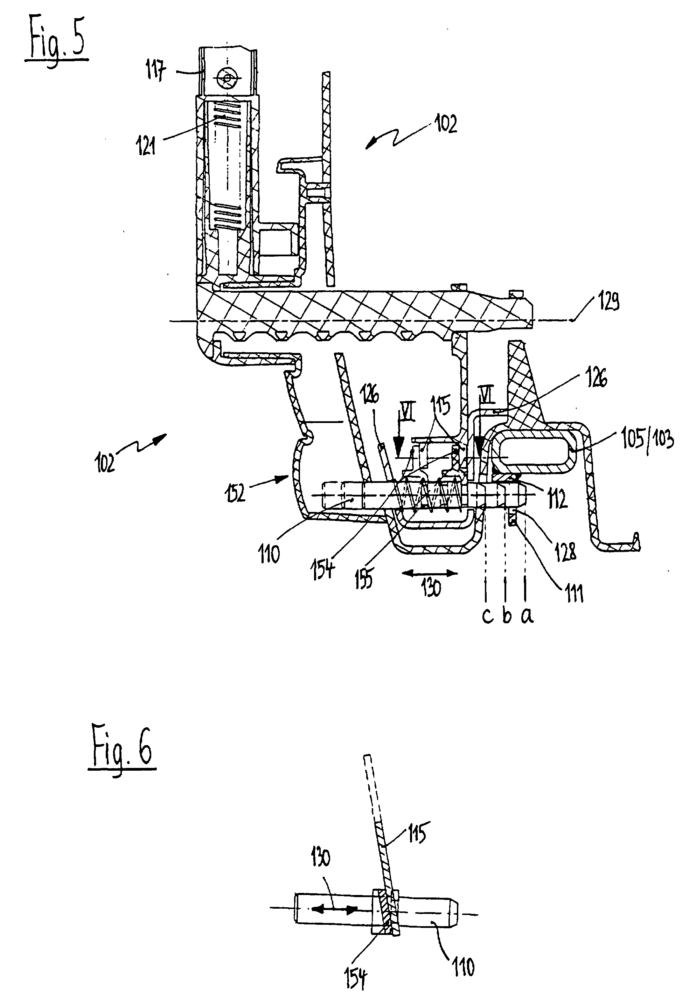

Wie insbesondere aus Figur 6 hervorgeht, ist sowohl das Element 154 als auch eine Schrägfläche 115 am Schalenteil 102 unter einem spitzen Winkel zu einer vertikal in Längsrichtung des Kindersitzes 101 verlaufenden Ebene angeordnet. Mit dem Verschwenken des Arms 117 läuft das Element 154 entlang dieser Schrägfläche 115, wodurch der Bolzen 110 in Querrichtung des Kindersitzes 101 (Pfeil 130) verschoben wird. Somit wird durch die Verstellung des Tragebügels 108 der Bolzen 110, wie oben anhand des ersten Ausführungsbeispiels beschrieben, zwischen den Positionen a bis c verschoben, so daß das Schalenteil 102 mit dem Untersatz 103 entweder verriegelt, in seiner Neigung verstellbar bzw. vom Untersatz 103 abnehmbar ist.

## Patentansprüche

1. Kindersitz (1; 101) für ein Fahrzeug, mit einem Schalenteil (2; 102) zur Aufnahme des Kindes und einem Untersatz (3; 103), der an einem Fahrzeugsitz befestigbar ist, wobei das Schalenteil (2; 102) über eine Koppeleinrichtung (9; 109) lösbar mit dem Untersatz (3; 103) verbunden ist sowie mit einer Einrichtung zur Neigungsverstellung des Schalenteils (2; 102) gegenüber dem Untersatz (3; 103),
**dadurch gekennzeichnet, dass** die Koppeleinrichtung (9; 109) wenigstens ein Verbindungselement (10; 110) aufweist, das die folgenden Positionen einnehmen kann:
- Rastposition (a) mit Formschluss zwischen dem Verbindungselement (10; 110) und dem Schalenteil (2; 102) bzw. dem Untersatz (3; 103) sowohl in Richtung (32) der Neigungsverstellung als in der Löserichtung (31), in der das Schalenteil (2; 102) vom Untersatz (3; 103) entfernbar ist,
- Sicherungsposition (b) mit Freigang in Richtung (32) der Neigungsverstellung und mit Formschluss in Löserichtung (31) und
- Entnahmeposition (c) mit Freigang sowohl in Richtung (32) der Neigungsverstellung als auch in Löserichtung (31).

2. Kindersitz nach Anspruch 1,
**dadurch gekennzeichnet, dass** das Verbindungselement (10; 110) stiftähnlich ausgebildet und in Querrichtung (30; 130) des Kindersitzes (1; 101) verschieblich ist, in der Rastposition (a) eine von mehreren Rastöffnungen (8; 108) einer in Richtung (32) der Neigungsverstellung verlaufenden Rastleiste (11; 111) durchsetzt und in der Sicherungsposition (c) einen in Richtung (32) der Neigungsverstellung verlaufenden Anschlag (12; 112) hintergreift.

3. Kindersitz nach Anspruch 2,
**dadurch gekennzeichnet, dass** die Verschiebung des Verbindungselementes (10; 110) in Querrichtung (30; 130) des Kindersitzes (1; 101) über eine Schrägfläche (15; 115) erfolgt, die einen spitzen Winkel mit einer parallel zur vertikalen Längsmittelebene des Kindersitzes (1; 101) verlaufenden Ebene einschließt.

4. Kindersitz nach Anspruch 3,
**dadurch gekennzeichnet, dass** das Verbindungselement (110) einen Abschnitt (154) aufweist, der mit der Schrägfläche (115) zusammenwirkt.

5. Kindersitz nach Anspruch 3,
**dadurch gekennzeichnet, dass** ein Hebel (17) zur Einstellung der einzelnen Positionen (a bis c) vorgesehen ist, wobei das Verbindungselement (10) am Hebel (17) angeordnet ist und der Hebel (17) durch Auflaufen an der Schrägfläche (15) in Querrichtung (30) des Kindersitzes (1) verlagerbar ist.

6. Kindersitz nach einem der vorangegangenen Ansprüche,
**dadurch gekennzeichnet, dass** das Verbindungselement (10; 110) in Richtung seiner Rastposition (a) federbelastet ist.

7. Kindersitz nach einem der vorangegangenen Ansprüche,
**dadurch gekennzeichnet, dass** die Rastleiste (11; 111) und der Anschlag (12; 112) am Untersatz (3; 103) angeordnet sind und der Hebel (17; 117) schwenkbar am Schalenteil (2; 102) gelagert ist.

8. Kindersitz nach einem der vorangegangenen Ansprüche,
**dadurch gekennzeichnet, dass** der Hebel (17; 117) Bestandteil eines Tragebügels (8) für das Schalenteil (2; 102) ist und in den einzelnen Positionen (a bis c) des Verbindungselementes (10; 110) rastbar ausgeführt ist.

## Claims

1. A child's seat (1; 101) for a vehicle, comprising a shell part (2; 102) for holding the child and a base (3; 103) for fastening to a vehicle seat, the shell part (2. 102) being releasably connected to the base (3; 103) by a coupling device (9; 109), and also comprising a device for adjusting the angle of the shell part (2; 102) relative to the base (3; 103),
**characterised in that** the coupling device (9; 109) has at least one connecting element (10; 110) which can occupy the following positions:
- stop position (a) with positive engagement between the connecting element (10; 110) and the shell part (2; 102) or the base (3; 103) both in the direction (32) for adjusting the angle and in the release direction (31) in which the shell part (2; 102) is removable from the base (3; 103),
- safety position (b) with free movement in the direction (32) for adjusting the angle and with positive engagement in the release direction (31), and
- removal position (c) with free movement both in the direction (32) for adjusting the angle and in the release direction (31).

2. A child's seat according to claim 1,
**characterised in that** the connecting element (10; 110) is pin-shaped and is movable in the transverse direction (30; 130) of the child' seat (1; 101), and in the stop position (a) extends through one of a number of stop openings (8; 108) in a stop bar (11;111) extending in the direction (32) for adjusting the angle and in the safety position (c) engages behind an abutment (12; 112) extending in the direction (32) for adjusting the angle.

3. A child's seat according to claim 2,
**characterised in that** the connecting element (10; 110) is moved in the transverse direction (30; 130) of the child's seat (1; 101) via a sloping surface (15; 115) at an acute angle to a plane extending parallel to the vertical longitudinal central plane of the child's seat (1; 101).

4. A child's seat according to claim 3,
**characterised in that** the connecting element (110) has a portion (154) which co-operates with the sloping surface (115).

5. A child's seat according to claim 3,
**characterised in that** a lever (17) for setting the individual positions (a to c) is provided, wherein the connecting element (10) is disposed on the lever (17) and the lever (17) is movable by running on the sloping surface (15) in the transverse direction (30) of the child's seat (1).

6. A child's seat according to any of the preceding claims,
**characterised in that** the connecting element (10; 110) is spring-loaded in the direction of its stop position (a).

7. A child's seat according to any of the preceding claims,
**characterised in that** the stop bar (11; 111) and the abutment (12; 112) are disposed on the base (3; 103) and the lever (17; 117) is pivotably mounted on the shell part (2; 102).

8. A child's seat according to any of the preceding claims,
**characterised in that** the lever (17; 117) is a component of a yoke (8) for supporting the shell part (2; 102) and is lockable in the individual positions (a to c) of the connecting element (10; 110).

## Revendications

1. Siège pour enfant (1, 101) destiné à un véhicule comprenant une coquille (2, 102) pour recevoir l'enfant et une embase (3, 103) qui se fixe au siège du véhicule,
la coquille (2, 102) étant reliée par une installation de couplage (9, 109) de manière amovible à l'embase (3, 103) et une installation de réglage de l'inclinaison de la coquille (2, 102) par rapport à l'embase (3, 103),
**caractérisé en ce que**
l'installation de couplage (9, 109) comporte au moins un élément de liaison (10, 110) qui peut prendre les positions suivantes :
- position de repos (a) avec liaison de forme entre l'élément de liaison (10, 110) et la partie de coquille (2, 102) ou l'embase (3, 103) à la fois dans la direction (32) du réglage de l'inclinaison et dans la direction de libération (31) dans laquelle la coquille (2, 102) peut s'enlever de l'embase (3, 103),
- position de sécurité (b) avec libération dans la direction (32) du réglage d'angle et liaison de forme dans la direction de détachement (31), et
- position d'extraction (c) avec libération à la fois dans la direction (32) et réglage d'inclinaison et dans la direction d'extraction (31).

2. Siège pour enfant selon la revendication 1,
**caractérisé en ce que**
l'élément de liaison (10, 110) est en forme de broche et coulisse dans la direction transversale (30, 130) du siège (1, 101), dans la position de repos (a), cet élément de liaison passe dans l'un des différents orifices d'accrochage (8, 108) d'une barrette d'accrochage (11, 111)dirigée dans la direction (32) du réglage d'inclinaison, et dans la position de sécurité (c), elle vient prendre derrière une butée (12, 112) dirigée dans la direction (32) de réglage d'inclinaison.

3. Siège pour enfant selon la revendication 2,
**caractérisé en ce que**
le coulissement de l'élément de liaison (10, 110) dans la direction transversale (30, 130) du siège (1, 101) se fait par une surface inclinée (15, 115) qui fait un angle aigu avec un plan parallèle au plan longitudinal médian vertical du siège (1, 101).

4. Siège pour enfant selon la revendication 3,
**caractérisé en ce que**
l'élément de liaison (110) comporte un segment (154) qui coopère avec la surface inclinée (115).

5. Siège pour enfant selon la revendication 3,
**caractérisé par**
un levier (17) pour régler les différentes positions (a-c), l'élément de liaison (10) étant prévu sur le levier (17) pouvant se déplacer dans la direction transversale (30) du siège (1) en passant sur la surface inclinée (15).

6. Siège pour enfant selon l'une quelconque des revendications précédentes,
**caractérisé en ce que**
l'élément de liaison (10, 110) est chargé par un ressort agissant dans la direction de sa position d'accrochage (a).

7. Siège pour enfant selon l'une quelconque des revendications précédentes,
**caractérisé en ce que**
la barrette d'accrochage (11, 111) et la butée (12, 112) sont prévues sur l'embase (3, 103) et le levier (17, 117) est monté basculant sur la coquille (2, 102).

8. Siège pour enfant selon l'une quelconque des revendications précédentes,
**caractérisé en ce que**
le levier (17, 117) fait partie d'un arceau de support (8) pour la coquille (2, 102) et peut s'accrocher dans les différentes positions (a-c) de l'élément de liaison (10, 110).
